# EUROPÄISCHE PATENTSCHRIFT

(11) **EP 3 472 489 B1**
(45) Veröffentlichungstag und Bekanntmachung des Hinweises auf die Patenterteilung: **21.07.2021**
(21) Anmeldenummer: 17723997.7
(22) Anmeldetag: 16.05.2017
(51) Int. Cl.: F16H 3/00, B60K 6/547, B60K 6/36, B60K 6/48

(54) **GETRIEBE FÜR EIN KRAFTFAHRZEUG**
TRANSMISSION FOR A MOTOR VEHICLE
BOÎTE DE VITESSES POUR VÉHICULE À MOTEUR

(30) Priorität: 16.06.2016 DE 102016210713
(43) Veröffentlichungstag der Anmeldung: 24.04.2019
(73) Patentinhaber: ZF Friedrichshafen AG, 88046 Friedrichshafen (DE)
(72) Erfinder: WECHS, Michael, 88138 Weißensberg (DE); WEHLEN, Timo, 88045 Friedrichshafen (DE); KALTENBACH, Johannes, 88048 Friedrichshafen (DE); HORN, Matthias, 88069 Tettnang (DE)
(74) Vertreter: ZF Friedrichshafen AG
(86) Internationale Anmeldenummer: PCT/EP2017/061699
(87) Internationale Veröffentlichungsnummer: WO 2017/215866

(56) Entgegenhaltungen:
- DE-A1-102009 002 342
- DE-A1-102009 002 354
- DE-A1-102011 089 167
- DE-A1-102012 019 881
- US-A1- 2010 257 967
- DATABASE WPI Week 201146 Thomson Scientific, London, GB; AN 2011-H99181 XP002772706, -& CN 201 849 307 U (GREAT WALL AUTOMOBILE HOLDING CO) 1. Juni 2011 (2011-06-01)

## Beschreibung

Die Erfindung betrifft ein Getriebe für ein Kraftfahrzeug, mit einer Getriebewelle, einer ersten Welle, einem der ersten Welle zugeordneten ersten Losrad, einem der ersten Welle zugeordneten ersten anderen Losrad, einer zweiten Welle, einem der zweiten Welle zugeordneten zweiten Losrad und einem der zweiten Welle zugeordneten zweiten anderen Losrad, wobei die Getriebewelle mit der ersten Welle und/oder der zweiten Welle wirkverbindbar ist, einer Getriebeausgangswelle, die mit der ersten und zweiten Welle wirkverbunden ist und einem ersten Schaltelement, mittels dem das erste Losrad mit dem ersten anderen Losrad drehfest verbindbar ist.

Die Erfindung betrifft außerdem einen Hybridantrieb mit einem solchen Getriebe und ein Kraftfahrzeug mit dem Getriebe oder dem Hybridantrieb.

Aus dem Stand der Technik ist der Einsatz von Getrieben in verschiedenen Fahrzeugen, unter anderem auch Kleinfahrzeugen, bekannt. Es existiert jedoch eine Vielzahl von Kleinfahrzeugen, bei denen wenig Bauraum für das Getriebe zur Verfügung steht. Da die Baugröße von Getrieben, insbesondere von Getrieben, die bei Hybridantrieben eingesetzt werden, teilweise sehr groß ist, können diese in Kleinfahrzeugen nicht eingebaut werden. Insbesondere bei Front-Quer-Fahrzeugen mit Hybridisierung ist der zur Verfügung stehende Axialbauraum sehr begrenzt. Zudem vergrößert sich der für das Getriebe benötigte Bauraum mit der Anzahl der vom Getriebe bereitgestellten Gänge, so dass die bei Kleinfahrzeugen eingesetzten Getriebe oftmals eine geringe Gangzahl aufweisen.

Die US 2010/257967 A1 beschreibt beispielsweise ein Doppelkupplungsgetriebe mit zwei Kupplungen, deren Eingangsseiten mit einer Antriebswelle und deren Ausgangsseiten mit jeweils einer von zwei koaxial zueinander angeordneten Getriebeeingangswellen verbunden sind, mit zumindest zwei Vorgelegewellen auf denen als Losräder ausgebildete Gangzahnräder drehbar gelagert sind. Auf den beiden Getriebeeingangswellen sind drehfest angeordnete und als Festräder ausgebildeten Gangzahnräder vorgesehen, die wenigstens zum Teil mit den Losrädern in Eingriff stehen. Ferner sind mehrere Koppelvorrichtungen zur drehfesten Verbindung von einem Losrad mit einer Vorgelegewelle und jeweils ein an den beiden Vorgelegewellen vorgesehenes Abtriebszahnrad vorgesehen. Zumindest einer der Losräder ist für mindestens zwei Gänge benutzbar.

Die DE 10 2012 019 881 A1 beschreibt ein Doppelkupplungsgetriebe, bei welchem durch Schließen einer Schalteinheit zwei Losräder miteinander verbunden werden können. Die die Losräder verbindende Schalteinheit ist zur Bildung der Vorwärtsgänge 1 und 3 vorgesehen.

Die DE 10 2009 002 342 A1 beschreibt ebenfalls ein Doppelkupplungsgetriebe, bei welchem durch Schließen eines Schaltelements zwei Losräder miteinander verbunden werden können. Das die Losräder verbindende Schaltelement ist zur Bildung der Vorwärtsgänge 1 und 7 vorgesehen.

Auch die DE 10 2009 002 354 A1 beschreibt ein Doppelkupplungsgetriebe, bei welchem durch Schließen eines Schaltelements zwei Losräder miteinander verbunden werden können. Das die Losräder verbindende Schaltelement ist zur Bildung der Vorwärtsgänge 1 und 8 vorgesehen.

Daher besteht die Aufgabe der Erfindung darin, ein Getriebe für ein Kraftfahrzeug anzugeben, das eine kleine Baugröße aufweist und viele Gänge bereitstellt, so dass es in Kleinfahrzeugen eingebaut werden kann.

Diese Aufgabe wird durch ein Getriebe der eingangs genannten Art gelöst, das dadurch gekennzeichnet ist, dass bei einem geschlossenen Zustand des ersten Schaltelements wahlweise ein erster Vorwärtsgang für einen Vorwärts-Fahrbetrieb oder ein sechster Vorwärtsgang für einen Vorwärts-Fahrbetrieb realisierbar ist.

Durch das Vorsehen des ersten Schaltelements wird erreicht, dass das erste Losrad und das erste andere Losrad auch für andere Gänge, nämlich für den ersten oder sechsten Vorwärtsgang, als die den beiden Losrädern bei einem geöffneten Schaltelement zugeordneten Gänge verwendbar sind. Dies bietet den Vorteil, dass die beiden Losräder für verschiedenste Gänge mehrfach genutzt werden können und die Leistungsdichte des Getriebes gesteigert wird. Insbesondere kann ein Getriebe mit insgesamt vier Losrädern bereitgestellt werden, das sechs Vorwärtsgänge für einen Vorwärts-Fahrbetrieb aufweist. Im Ergebnis kann durch das Verteilen der vier Losräder auf zwei Wellen und das Anordnen der vier Losräder derart, dass jeweils zwei Losräder in einer Radebene in Wirkverbindung stehen, ein kompaktes Getriebe mit einem hohen Mehrfachnutzungsgrad bereitgestellt werden.

Ein weiterer Vorteil der Erfindung besteht darin, dass durch das Vorsehen von wenigstens zwei, insbesondere genau zwei oder genau drei, Radebenen für den Antrieb und einer einzigen Radebene für den Abtrieb ein in axialer Richtung kompaktes Getriebe realisiert werden kann. Insbesondere kann das Getriebe in Front-Quer-Fahrzeugen mit geringem Axialbauraum eingebaut werden. Die Radebene entspricht einer Wirkebene, in der die Eingangswelle, mit der ersten und/oder zweiten Welle wirkverbunden ist oder einer Wirkebene, in der die erste und/oder zweite Welle mit der Getriebeausgangswelle wirkverbunden sind.

Im Sinne der Erfindung entspricht ein Losrad einem Rad, beispielsweise einem Zahnrad oder Stirnrad, das einer Welle zugeordnet ist, jedoch mit der Welle nicht drehfest verbunden ist. Dies bedeutet, dass sich die Welle relativ zu dem Losrad drehen kann. Eine drehfeste Verbindung zwischen dem Losrad und der Welle kann durch ein Schaltelement erfolgen, das in einer Schaltstellung eine drehfeste Verbindung zwischen dem Losrad und der Welle realisiert. Ein Festrad ist dagegen drehfest mit der Welle verbunden, wobei das Festrad ebenfalls als Zahnrad oder Stirnrad ausgebildet sein kann. In diesem Fall ist kein Schaltelement zum drehfesten Verbinden des Festrades mit der Welle notwendig.

Als drehfeste Verbindung wird eine Verbindung zwischen zwei Bauteilen verstanden, die derart ausgebildet ist, dass die beiden miteinander verbundenen Bauteile stets die gleiche Drehzahl und Drehrichtung aufweisen. Dies ist nicht der Fall, wenn beispielsweise zwischen den beiden miteinander verbundenen Bauteilen ein Schaltelement angeordnet ist, das sich im geöffneten Zustand befindet.

Die Ausbildung des Getriebes derart, dass bei einem geschlossenen ersten Schaltelement wahlweise der erste oder sechster Vorwärtsgang realisiert werden kann, bedeutet, dass beim geschlossenen Zustand des ersten Schaltelements nur einer der beiden zuvor genannten Vorwärtsgänge und kein anderer Vorwärtsgang als der erste oder sechste Vorwärtsgang realisiert werden kann. Zur Realisierung des ersten oder sechsten Vorwärtsgangs muss neben dem ersten Schaltelement noch wenigstens ein, insbesondere genau zwei Schaltelemente, geschlossen werden.

Im Sinne der Erfindung wird unter der Welle nicht ausschließlich ein beispielsweise zylindrisches, drehbar gelagertes Maschinenelement zur Übertragung von Drehmomenten verstanden. Vielmehr sind hierunter auch allgemeine Verbindungselemente zu verstehen, die einzelne Bauteile miteinander verbinden, insbesondere Verbindungselemente, die mehrere Bauteile drehfest miteinander verbinden.

Die Getriebeausgangswelle kann über ein Ausgleichsgetriebe, insbesondere über ein Differenzialgetriebe, mit Fahrzeugrädern in Wirkverbindung stehen.

Bei einer besonderen Ausführung kann bei einem geöffneten Zustand des ersten Schaltelements dem ersten Losrad ein dritter Vorwärtsgang für einen Vorwärts-Fahrbetrieb, dem ersten anderen Losrad ein vierter Vorwärtsgang für einen Vorwärts-Fahrbetrieb, dem zweiten Losrad ein fünfter Vorwärtsgang für einen Vorwärts-Fahrbetrieb und dem zweiten anderen Losrad ein zweiter Vorwärtsgang für einen Vorwärts-Fahrbetrieb zugeordnet sein.

Bei einem geschlossenen Zustand des ersten Schaltelements können den einzelnen Losrädern folgende Vorwärtsgänge für einen Vorwärts-Fahrbetrieb zugeordnet sein. Dem ersten Losrad kann der erste Vorwärtsgang oder der sechste Vorwärtsgang zugeordnet sein. Dem ersten anderen Losrad kann der erste Vorwärtsgang oder der sechste Vorwärtsgang zugeordnet sein. Dem zweiten Losrad kann der sechste Vorwärtsgang zugeordnet sein und/oder dem zweiten anderen Losrad kann der ersten Vorwärtsgang zugeordnet sein. Da der bei einem geschlossenen ersten Schaltelement realisierbare erste oder sechste Vorwärtsgang nicht benachbart zu den Vorwärtsgängen ist, die dem ersten Losrad und dem ersten anderen Losrad bei einem geöffneten Schaltelement zugeordnet sind, können die einzelnen Gangwechsel in dem Getriebe ohne Zugkraftunterbrechung erfolgen. Dabei ist ein Losrad einem Gang zugeordnet, wenn bei einem Schalten des Getriebes in den Gang das dem Gang zugeordnete Losrad mit der jeweiligen Welle drehfest verbunden ist. Die drehfeste Verbindung des Losrads mit der Welle kann besonders einfach durch ein Schaltelement realisiert werden.

Von besonderem Vorteil ist, dass bei einem geschlossenen ersten Schaltelement das erste Losrad und das andere Losrad in beiden Leistungsflussrichtungen verwendet werden kann. Insbesondere kann das erste Losrad und das erste andere Losrad nicht nur für einen Vorwärts-Fahrbetrieb sondern auch für einen Rückwärts-Fahrbetrieb verwendet werden. Im Ergebnis wird die Leistungsdichte des Getriebes gesteigert.

Der erste Vorwärtsgang kann über das erste Losrad, das erste andere Losrad und das zweite andere Losrad gewunden werden. Der sechste Vorwärtsgang kann über das erste andere Losrad, das erste Losrad und das zweite Losrad gewunden werden. Die drehfeste Verbindung zwischen dem ersten Losrad und dem ersten anderem Losrad kann auf einfache Weise durch ausschließliches Schließen des ersten Schaltelements realisiert werden. Der erste und sechste Vorwärtsgang können Windungsgänge sein, bei denen im Vergleich zu den restlichen Gängen die Kraftzuführung von der Verbrennungskraftmaschine zur Ausgangswelle über zusätzliche, insbesondere wenigstens zwei, Zahneingriffe erfolgt.

Dabei kann das zweite andere Losrad mittels eines zweiten Schaltelements mit der zweiten Welle drehfest verbunden werden. Das zweite Losrad kann mittels eines dritten Schaltelements mit der zweiten Welle drehfest verbunden werden und/oder das erste andere Losrad kann mittels eines vierten Schaltelements mit der ersten Welle drehfest verbunden werden. Darüber hinaus kann das erste Losrad mittels eines fünften Schaltelements mit der ersten Welle drehfest verbunden werden.

Ganz besonders vorteilhaft ist, wenn das erste und vierte Schaltelement zu einem Doppelschaltelement zusammengefasst sind. Alternativ kann das erste und fünfte Schaltelement zu einem Doppelschaltelement zusammengefasst werden. Darüber hinaus kann das zweite und dritte Schaltelement als Doppelschaltelement ausgebildet sein. Dagegen kann das fünfte Schaltelement als Einzelschaltelement ausgebildet sein. Das Vorsehen von Doppelschaltelementen bietet den Vorteil, dass im Gegensatz zum Vorsehen der beiden Schaltelemente als Einzelschaltelement nur ein einziger Aktuator zum Betätigen des Doppelschaltelements vorgesehen werden muss.

Bei einer besonderen Ausführung kann die Getriebewelle wenigstens zwei, insbesondere genau zwei, Festräder aufweisen. Dabei kann ein Festrad mit dem ersten Losrad und dem zweiten Losrad kämmen und ein anderes Festrad kann mit dem ersten anderen Losrad und dem zweiten anderen Losrad kämmen. Dies bietet den Vorteil, dass eine Mehrfachnutzung des Festrads und des anderen Festrads erfolgt. Insbesondere kann dasselbe Festrad und dasselbe andere Festrad zum Einstellen von verschiedenen Gängen verwendet werden. Im Ergebnis lässt sich durch die Bauweise mit zwei Wellen und der Getriebeausgangswelle ein sehr kompaktes Getriebekonzept realisieren.

Bei einer alternativen Ausführung kann die Getriebewelle wenigstens drei, insbesondere genau drei, Festräder aufweisen. Dabei kann ein Festrad mit dem zweiten Losrad und ein weiteres Festrad kann mit dem ersten Losrad und ein anderes Festrad kann mit dem ersten anderen Losrad und dem zweiten anderen Losrad kämmen. Alternativ kann ein Festrad mit dem ersten und zweiten Losrad und ein weiteres Festrad kann mit dem ersten anderen Losrad und ein anderes Festrad kann mit dem zweiten anderen Losrad kämmen. In dieser Ausführung wird die Mehrfachnutzung des Festrads und des anderen Festrads durch Vorsehen eines weiteren Festrads aufgelöst. Dadurch lässt sich die Flexibilität in der Realisierung einer gewünschten Übersetzungsreihe steigern.

Ganz besonders vorteilhaft hierbei ist, wenn das beim Auflösen entstehende weitere Festrad parallel zu dem Einzelschaltelement positioniert wird, um den Vorteil der axial kompakten Bauweise nicht zu verlieren. Das weitere Losrad ist zu dem Einzelschaltelement, insbesondere zu dem fünften Schaltelement, parallel angeordnet, wenn eine Ebene, die durch das weitere Festrad verläuft parallel zu einer Ebene ist, die durch das fünfte Schaltelement verläuft.

Bei einer besonderen Ausführung kann die Getriebewelle eine Hohlwelle und eine Vollwelle aufweisen. Die Hohlwelle und Vollwelle können koaxial zueinander angeordnet sein, wobei die Hohlwelle die Vollwelle zumindest teilweise umschließt. Die erste und zweite Welle kann jeweils eine Vorgelegewelle sein. Die Getriebewelle und die erste und zweite Welle können achsparallel zueinander angeordnet sein. Die Getriebewelle und die erste und zweite Welle können in radialer Richtung zueinander beabstandet angeordnet sein.

Das Festrad kann mit der Hohlwelle und das andere Festrad kann mit der Vollwelle drehfest verbunden sein. Bei einer alternativen Ausführung kann das Festrad mit der Vollwelle und das andere Festrad kann mit der Hohlwelle drehfest verbunden sein. Darüber hinaus kann alternativ das Festrad mit der Hohlwelle und das andere Festrad kann mit der Vollwelle drehfest verbunden sein und das weitere Festrad kann mit der Vollwelle oder der Hohlwelle drehfest verbunden sein. Alternativ kann das Festrad mit der Vollwelle und das andere Festrad mit der Hohlwelle drehfest verbunden sein und das weitere Festrad kann mit der Vollwelle oder der Hohlwelle drehfest verbunden sein. Durch die zuvor beschriebene Anordnung und Ankopplung des Festrads, des anderen Festrads und/oder des weiteren Festrads mit der Vollwelle oder Hohlwelle lässt sich auf besonders einfache Weise ein kompaktes Getriebe realisieren.

Das Getriebe kann eine Eingangswelle aufweisen, die mit der mit der nicht zum Getriebe gehörenden Verbrennungskraftmaschine drehfest verbindbar ist. Die Eingangswelle kann mittels eines sechsten und/oder siebten Schaltelements mit der Getriebewelle drehfest verbunden werden. Insbesondere kann die Eingangswelle mittels des sechsten Schaltelements mit dem anderen Festrad drehfest verbunden werden. Zusätzlich oder alternativ kann die Eingangswelle mittels des siebten Schaltelements mit dem Festrad drehfest verbunden werden. Das sechste und siebte Schaltelement können als Doppelschaltelement, insbesondere als Doppelkupplung, ausgebildet sein.

Das erfindungsgemäße Getriebe weist den Vorteil auf, dass das Getriebe vom ersten bis zum sechsten Vorwärtsgang voll lastschaltbar ist. Insbesondere weist das Getriebe den Vorteil auf, dass sechs voll lastschaltfähige Vorwärtsgänge durch zwei Lastschaltelemente, nämlich das sechste und siebte Schaltelement und fünf weitere Schaltelemente, vorzugsweise nicht lastschaltfähige Schaltelemente, realisiert werden können. Das erste bis fünfte Schaltelement kann als Synchronisierung, reibschlüssige Kupplung oder Klaue ausgeführt sein.

Bei einer ganz besonders vorteilhaften Ausführung kann das Getriebe eine weitere Eingangswelle aufweisen, die mit einer nicht zum Getriebe gehörenden elektrischen Maschine drehfest verbindbar ist. Dadurch lässt sich auf einfache Weise ein Hybridantrieb, der das Getriebe und die elektrische Maschine aufweist, realisieren. So ist es möglich, dass mittels der sechs Vorwärtsgänge ein Vorwärts-Fahrbetrieb unter reiner Verwendung des Verbrennungsmotors oder ein Vorwärts-Fahrbetrieb unter Verwendung des Verbrennungsmotors und des Elektromotors realisiert werden kann. Die weitere Eingangswelle kann mit der Eingangswelle oder der Hohlwelle drehfest verbunden werden. Dadurch lässt sich auf besonders einfache Weise eine Ankopplung der elektrischen Maschine an das Getriebe realisieren.

Bei einer ganz besonders vorteilhaften Ausführung kann das Getriebe eine dritte Welle mit einem dritten Losrad aufweisen, das mit dem ersten Losrad oder dem zweiten Losrad kämmt. Zudem kann das Getriebe ein achtes Schaltelement aufweisen, mittels dem das dritte Losrad mit der dritten Welle drehfest verbindbar ist. Durch das Vorsehen der dritten Welle lässt sich auf einfache Weise ein Rückwärts-Fahrbetrieb realisieren. Dazu muss das achte Schaltelement geschlossen werden, so dass eine drehfeste Verbindung zwischen dem dritten Losrad und der dritten Welle hergestellt wird. Die dritte Welle kann mit der Getriebeausgangswelle wirkverbunden sein.

Alternativ kann das Getriebe ein viertes Losrad aufweisen, das der ersten Welle zugeordnet ist und mit dem zweiten anderen Losrad kämmt. Darüber hinaus kann das Getriebe das achte Schaltelement aufweisen, mittels dem das vierte Losrad mit der ersten Welle drehfest verbindbar ist. Ein derartiges Getriebe weist den Vorteil auf, dass keine zusätzliche Welle für die Realisierung eines Rückwärtsgangs notwendig ist. Darüber hinaus können mehrere Rückwärtsgänge bereitgestellt werden. Das achte Schaltelement und das vierte Schaltelement können zu einem Doppelschaltelement zusammengefasst werden, was den Vorteil bietet, dass kein zusätzlicher Aktuator für das achte Schaltelement vorgesehen werden muss.

Von besonderem Vorteil ist ein Hybridantrieb für ein Kraftfahrzeug, der ein erfindungsgemäßes Getriebe, das ein Automatikgetriebe sein kann, die Verbrennungskraftmaschine und die elektrische Maschine aufweist. Die Eingangswelle des Getriebes ist mit dem Verbrennungsmotor und die weitere Eingangswelle ist mit der elektrischen Maschine drehfest verbunden. Besonders vorteilhaft ist, wenn der Verbrennungsmotor über eine Trennkopplung mit dem Getriebe drehfest verbindbar ist. Darüber hinaus ist ein Kraftfahrzeug mit dem erfindungsgemäßen Getriebe und/oder mit dem Hybridantrieb von besonderem Vorteil.

In den Figuren ist der Erfindungsgegenstand schematisch dargestellt und wird nachfolgend beschrieben, wobei gleiche oder gleichwirkende Elemente zumeist mit denselben Bezugszeichen versehen sind. Dabei zeigen:
Fig. 1 schematisch ein erstes Ausführungsbeispiel eines erfindungsgemäßen Getriebes für ein Kraftfahrzeug,
Fig. 2 schematisch ein zweites Ausführungsbeispiel eines erfindungsgemäßen Getriebes für ein Kraftfahrzeug,
Fig. 3 schematisch ein drittes Ausführungsbeispiel des erfindungsgemäßen Getriebes für ein Kraftfahrzeug,
Fig. 4 schematisch ein viertes Ausführungsbeispiel eines erfindungsgemäßen Getriebes für ein Kraftfahrzeug,
Fig. 5 schematisch ein fünftes Ausführungsbeispiel des erfindungsgemäßen Getriebes für ein Kraftfahrzeug, das Bestandteil eines Hybridantriebs ist,
Fig. 6 schematisch ein sechstes Ausführungsbeispiel des erfindungsgemäßen Getriebes für ein Kraftfahrzeug, das Bestandteil eines Hybridantriebs ist,
Fig. 7 schematisch ein siebtes Ausführungsbeispiel des erfindungsgemäßen Getriebes für ein Kraftfahrzeug, das Bestandteil eines Hybridantriebs ist,
Fig. 8 schematisch ein achtes Ausführungsbeispiel des erfindungsgemäßen Getriebes für ein Kraftfahrzeug, das Bestandteil eines Hybridantriebs ist,
Fig. 9 schematisch ein neuntes Ausführungsbeispiel des erfindungsgemäßen Getriebes für ein Kraftfahrzeug,
Fig.10 schematisch ein zehntes Ausführungsbeispiel des erfindungsgemäßen Getriebes für ein Kraftfahrzeug,
Fig.11 schematisch ein elftes Ausführungsbeispiel des erfindungsgemäßen Getriebes für ein Kraftfahrzeug,
Fig.12 schematisch ein zwölftes Ausführungsbeispiel des erfindungsgemäßen Getriebes für ein Kraftfahrzeug,
Fig. 13 schematisch ein dreizehntes Ausführungsbeispiel des erfindungsgemäßen Getriebes für ein Kraftfahrzeug,
Fig.14 eine Schaltmatrix für die in Figuren 1, 2 und 5 bis 12 dargestellten Getriebe für ein Kraftfahrzeug,
Fig.15 eine Schaltmatrix für das in Fig. 3 dargestellte Getriebe für ein Kraftfahrzeug,
Fig.16 eine Schaltmatrix für das in Fig. 4 und in Fig. 13 dargestellte Getriebe für ein Kraftfahrzeug,

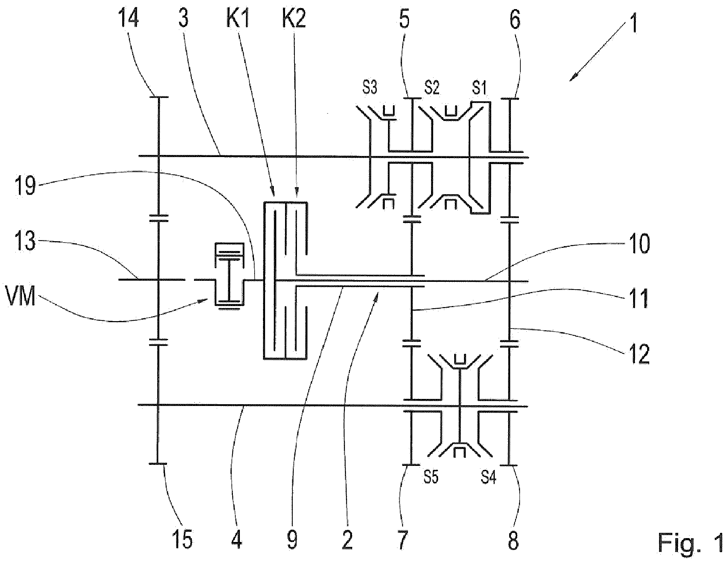

Fig. 1 zeigt schematisch ein erstes Ausführungsbeispiel eines erfindungsgemäßen Getriebes für ein Kraftfahrzeug. Das Getriebe 1 weist eine Getriebewelle 2, eine erste Welle 3 und eine zweite Welle 4 auf. Der ersten Welle 3 ist ein erstes Losrad 5 und ein erstes anderes Losrad 6 und der zweiten Welle 4 ist ein zweites Losrad 7 und ein zweites anderes Losrad 8 zugeordnet. Die Eingangswelle 2 kann durch Schließen von nachfolgend beschriebenen Schaltelementen mit der ersten Welle 3 und der zweiten Welle 4 wirkverbunden werden. Das Getriebe 1 weist darüber hinaus eine Getriebeausgangswelle 13 auf, die mit der ersten und zweiten Welle 3, 4 wirkverbunden ist. Außerdem weist das Getriebe 1 ein erstes Schaltelement S2 auf, mittels dem das erste Losrad 5 und das erste andere Losrad 6 drehfest miteinander verbindbar sind. Dies bedeutet, dass im geschlossenen Zustand des ersten Schaltelements S1 das erste Losrad 5 und das erste andere Losrad 6 mit der gleichen Drehzahl und in die gleiche Drehrichtung drehen.

Dabei können zwei unterschiedliche Vorwärtsgänge für einen Vorwärts-Fahrbetrieb realisierbar werden, wenn das erste Schaltelement S2 geschlossen ist. Insbesondere sind bei einem geschlossenen Schaltelement S2 wahlweise ein erster Vorwärtsgang für einen Vorwärts-Fahrbetrieb oder ein sechster Vorwärtsgang für einen Vorwärts-Fahrbetrieb realisierbar.

Die Getriebewelle 2 weist eine Hohlwelle 9 und eine Vollwelle 10 auf. Ein Festrad 11 ist mit der Hohlwelle 9 drehfest verbunden. Ein anderes Festrad 12 ist mit der Vollwelle 10 drehfest verbunden. Das Festrad 11 kämmt in einer ersten Radebene mit dem ersten Losrad 5 und dem zweiten Losrad 7 und das andere Festrad 12 kämmt in einer zweiten Radebene mit dem ersten anderen Losrad 6 und dem zweiten anderen Losrad 8.

Das Getriebe 1 weist ein zweites Schaltelement S4 auf, mittels dem das zweite andere Losrads 8 mit der zweiten Welle 4 drehfest verbunden werden kann. Darüber hinaus weist das Getriebe 1 ein drittes Schaltelement S5 auf, mittels dem das zweite Losrad 7 mit der zweiten Welle 4 drehfest verbunden werden kann. Dabei sind das zweite und dritte Schaltelement S4, S5 zu einem Doppelschaltelement zusammengefasst, so dass nur ein Aktuator zum Betätigen der beiden Schaltelemente notwendig ist.

Außerdem weist das Getriebe 1 ein viertes Schaltelement S1 auf, mittels dem das erste andere Losrad 6 mit der ersten Welle 3 drehfest verbunden werden kann. Das erste Schaltelement S2 und das vierte Schaltelement S1 sind zu einem anderen Doppelschaltelement zusammengefasst, so dass nur ein einziger Aktuator zum Betätigen des ersten und vierten Schaltelements S2, S1 benötigt wird. Zusätzlich weist das Getriebe 1 ein fünftes Schaltelement S3 auf, mittels dem das erste Losrad 5 mit der ersten Welle 3 drehfest verbunden werden kann. Das fünfte Schaltelement S3 ist als Einzelschaltelement ausgebildet. Im geschlossenen Zustand des vierten und/oder fünften Schaltelements S1, S3 ist die Eingangswelle 2 mit der ersten Welle 3 wirkverbunden.

Die Getriebewelle 2 ist mittels eines sechsten und/oder siebten Schaltelements K1, K2 des Getriebes 1 mit einer Eingangswelle 19 drehfest verbindbar. Die Eingangswelle 19 ist mit der Verbrennungskraftmaschine VM drehfest verbunden. Dabei sind die Vollwelle 10 und das andere Festrad 12 mittels des sechsten Schaltelements K1 mit der Eingangswelle 19 drehfest verbindbar. Die Hohlwelle 9 und das Festrad 11 sind mittels des siebten Schaltelements K2 mit der Eingangswelle 19 drehfest verbindbar. Das sechste und siebte Schaltelement K1, K2 sind als weiteres Doppelschaltelement, insbesondere als Doppelkupplung, ausgeführt. Die Doppelkupplung ist lastschaltbar ausgebildet.

Die erste Welle 3 weist ein erstes Festrad 14 auf, mittels dem sie mit der Getriebeausgangswelle 13 in Wirkverbindung steht. Die zweite Welle 4 weist ein zweites Festrad 15 auf, mittels dem sie mit der Getriebeausgangswelle 13 in Wirkverbindung steht.

Den einzelnen Losrädern sind abhängig vom Schaltzustand des ersten Schaltelements S2 unterschiedliche Vorwärtsgänge für einen Vorwärts-Fahrbetrieb zugeordnet. So sind bei einem geschlossenen Zustand des ersten Schaltelements S2 dem ersten Losrad 5 der erste oder sechste Vorwärtsgang zugeordnet. Dem ersten anderen Losrad 6 sind der erste oder sechste Vorwärtsgang zugeordnet. Dem zweiten Losrad 7 ist der sechste Vorwärtsgang und dem zweiten anderen Losrad 8 ist der erste Vorwärtsgang zugeordnet.

Bei einem geöffneten Zustand sind den Losrädern folgende Vorwärtsgänge für einen Vorwärts-Fahrbetrieb zugeordnet. Dem ersten Losrad 5 ist der dritte Vorwärtsgang, dem ersten anderen Losrad der vierte Gang, dem zweiten Losrad der fünfte Gang und dem zweiten anderen Losrad der zweite Gang zugeordnet.

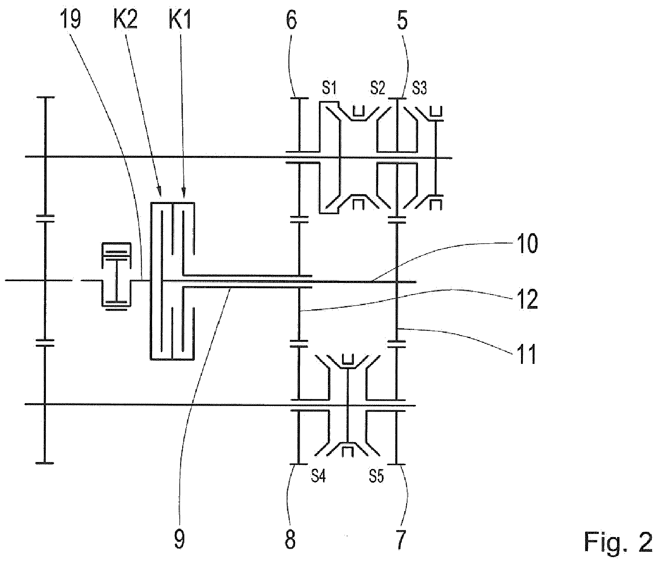

Fig. 2 zeigt schematisch ein zweites Ausführungsbeispiel des erfindungsgemäßen Getriebes für ein Kraftfahrzeug. Das zweite Ausführungsbeispiel unterscheidet sich von dem in Fig. 1 gezeigten ersten Ausführungsbeispiel darin, dass das Festrad 11 mit der Vollwelle 10 und das andere Festrad 12 mit der Hohlwelle 9 drehfest verbunden ist. Dabei kämmt analog zu dem ersten Ausführungsbeispiel das Festrad 11 mit dem ersten Losrad 5 und dem zweiten Losrad 7 und das andere Festrad 12 kämmt mit dem ersten anderen Losrad 6 und dem zweiten anderen Losrad 8. Ein weiterer Unterschied besteht darin, dass die Vollwelle 10 mittels des siebten Schaltelements K2 mit der Eingangswelle 19 drehfest verbindbar ist. Außerdem ist die Hohlwelle 9 mittels des sechsten Schaltelements K1 mit der Eingangswelle 19 drehfest verbindbar.

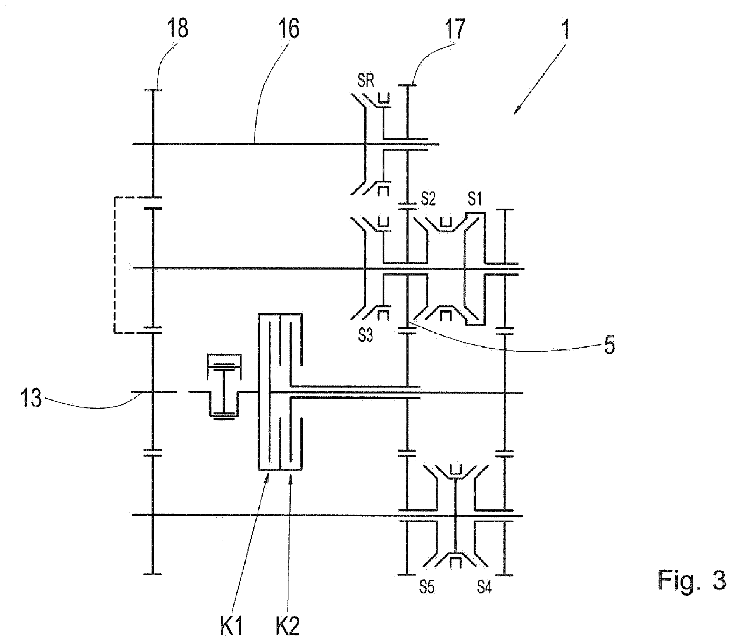

Fig. 3 zeigt schematisch ein drittes Ausführungsbeispiel des erfindungsgemäßen Getriebes, das auf dem in Fig. 1 dargestellten ersten Ausführungsbeispiel basiert. Das Getriebe 1 weist eine dritte Welle 16 mit einem dritten Losrad 17 und einem dritten Festrad 18 auf. Das dritte Losrad 17 kämmt mit dem ersten Losrad 5 und das dritte Festrad 18 ist in Wirkverbindung mit der Getriebeausgangswelle 13, wie durch die gestrichelte Linie dargestellt ist. Darüber hinaus weist das Getriebe 1 ein achtes Schaltelement SR auf, mittels dem das dritte Losrad 17 mit der dritten Welle 16 drehfest verbunden werden kann. Das Vorsehen der dritten Welle 16, mit dem achten Schaltelement SR und dem dritten Losrad 17 ermöglicht, dass das Getriebe 1 einen mechanischen Rückwärtsgang bereitstellt.

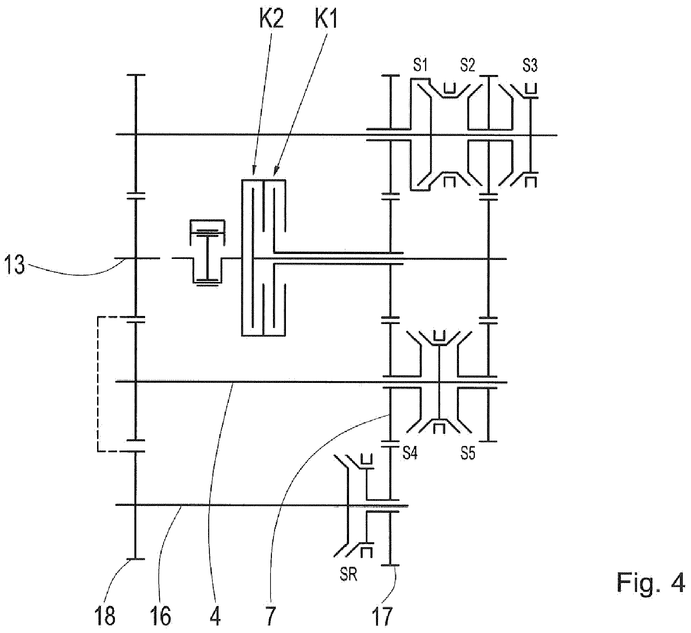

Fig. 4 zeigt schematisch ein viertes Ausführungsbeispiel des erfindungsgemäßen Getriebes, das auf dem in Fig. 2 dargestellten zweiten Ausführungsbeispiel basiert. Das Getriebe 1 weist die dritte Welle 16 mit dem dritten Losrad 17 und dem dritten Festrad 18 auf. Das dritte Losrad 17 kämmt mit dem zweiten Losrad 7 und das dritte Festrad 18 ist in Wirkverbindung mit der Getriebeausgangswelle 13, wie durch die gestrichelte Linie dargestellt ist. Darüber hinaus weist das Getriebe 1 das achte Schaltelement SR auf, mittels dem das dritte Losrad 17 mit der dritten Welle 16 drehfest verbunden werden kann. Das Vorsehen der dritten Welle 16, mit dem achten Schaltelement SR und dem dritten Losrad 17 ermöglicht, dass das Getriebe 1 einen mechanischen Rückwärtsgang bereitstellt.

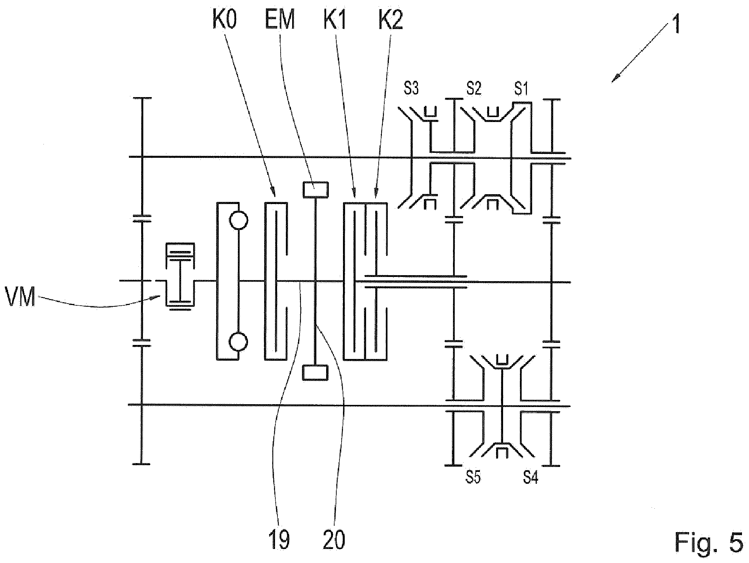

Fig. 5 zeigt ein fünftes Ausführungsbeispiel des erfindungsgemäßen Getriebes, das auf dem in Fig. 1 gezeigten ersten Ausführungsbeispiel basiert und Bestandteil eines Hybridantriebs ist. Die Eingangswelle 19 ist mittels einer Trennkupplung K0 über einen Torsionsdämpfer mit der Verbrennungskraftmaschine VM drehfest verbindbar. Der Hybridantrieb weist neben dem Getriebe 1 eine elektrische Maschine EM auf, die mittels einer weiteren Eingangswelle 20 mit der Eingangswelle 19, insbesondere unmittelbar, drehfest verbunden ist.

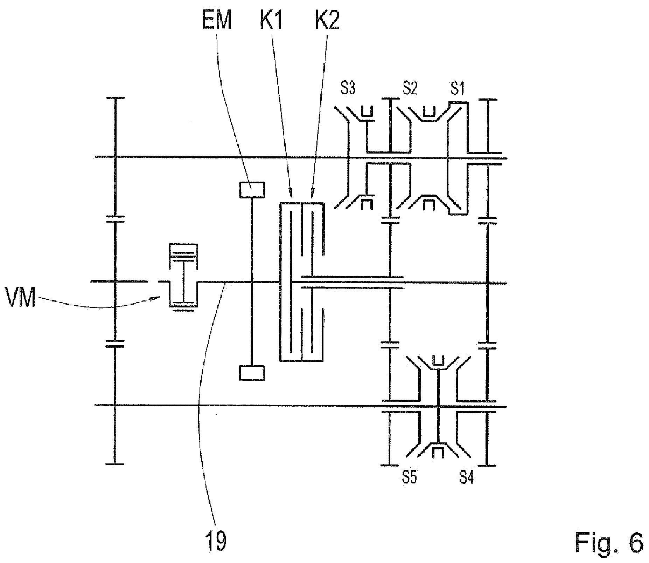

Fig. 6 zeigt ein sechstes Ausführungsbeispiel des erfindungsgemäßen Getriebes, das Bestandteil des Hybridantriebs ist. Dieses unterscheidet sich von dem in Fig. 5 dargestellten Getriebe 1 dadurch, dass keine Trennkupplung K0 vorhanden ist und die Eingangswelle 19 direkt, also ohne Kraftunterbrechung, mit der Verbrennungskraftmaschine VM drehfest verbunden ist.

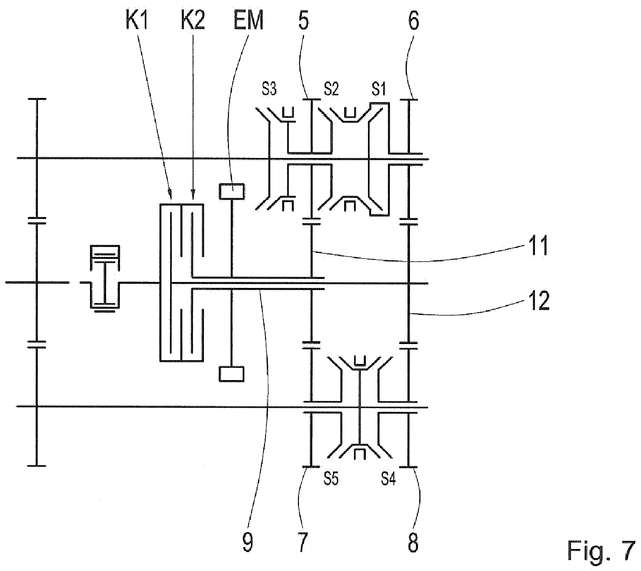

Fig. 7 zeigt ein siebtes Ausführungsbeispiel des erfindungsgemäßen Getriebes, das in einem Hybridantrieb eingesetzt ist. Das siebte Ausführungsbeispiel unterscheidet sich von dem sechsten Ausführungsbeispiel dadurch, dass die elektrische Maschine EM mit der Hohlwelle 9 drehfest verbunden ist.

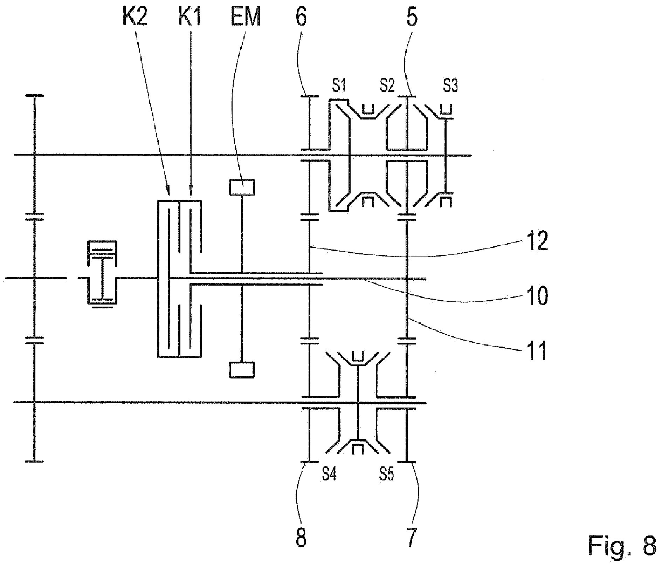

Fig. 8 zeigt schematisch ein viertes Ausführungsbeispiel des erfindungsgemäßen Getriebes, das in einem Hybridantrieb eingesetzt ist. Dieses unterscheidet sich von dem in Figur 7 dargestellten siebten Ausführungsbeispiel darin, dass das Festrad 11 mit der Vollwelle 10 und das andere Festrad 12 mit der Hohlwelle 9 drehfest verbunden ist. Dabei kämmt analog zu dem siebten Ausführungsbeispiel das Festrad 11 mit dem ersten Losrad 5 und dem zweiten Losrad 7 und das andere Festrad 12 kämmt mit dem ersten anderen Losrad 6 und dem zweiten anderen Losrad 8.

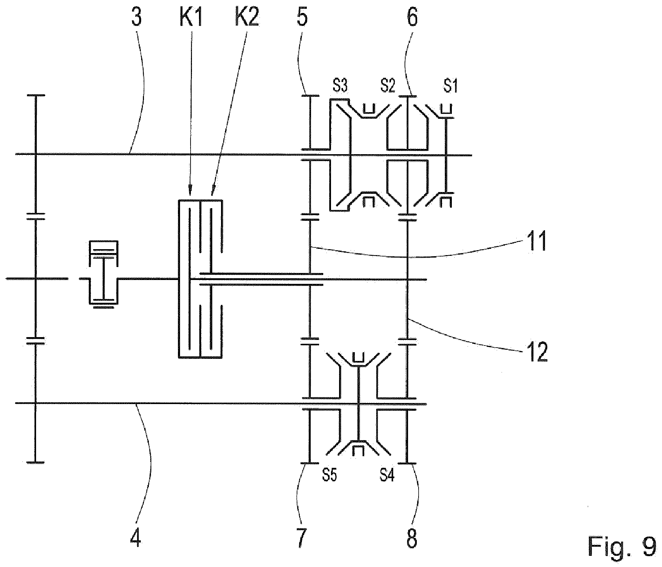

Fig. 9 zeigt ein neuntes Ausführungsbeispiel des erfindungsgemäßen Getriebes. Dieses unterscheidet sich von dem in Figur 1 dargestellten ersten Ausführungsbeispiel dadurch, dass das fünfte Schaltelement S3 und das zweite Schaltelement S2 als Doppelschaltelement ausgebildet sind. Das vierte Schaltelement S1 ist als Einzelschaltelement ausgebildet.

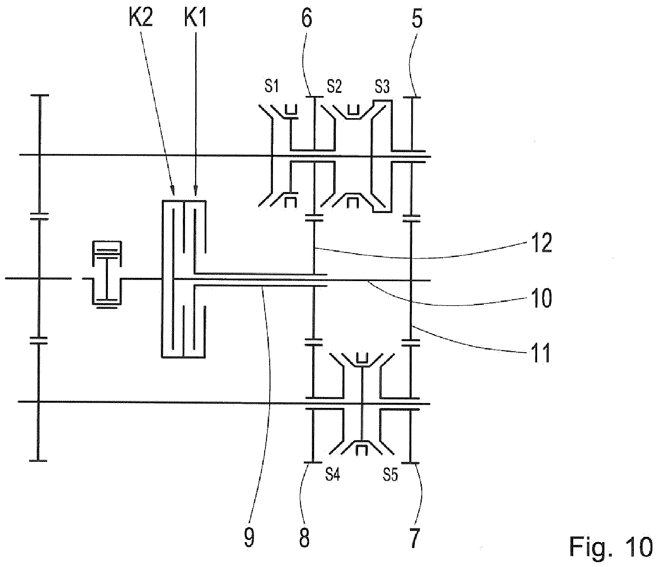

Fig. 10 zeigt ein zehntes Ausführungsbeispiel des erfindungsgemäßen Getriebes, das sich von dem neunten Ausführungsbeispiel dadurch unterscheidet, dass das Festrad 11 mit der Vollwelle 10 und das andere Festrad 12 mit der Hohlwelle 9 drehfest verbunden ist. Dabei kämmt analog zu dem neunten Ausführungsbeispiel das Festrad 11 mit dem ersten Losrad 5 und dem zweiten Losrad 7 und das andere Festrad 12 kämmt mit dem ersten anderen Losrad 6 und dem zweiten anderen Losrad 8.

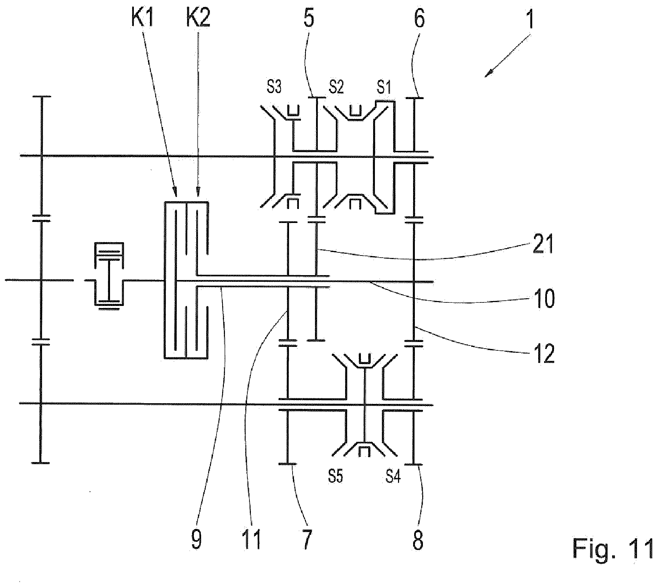

Fig. 11 zeigt ein elftes Ausführungsbeispiel des erfindungsgemäßen Getriebes. Dieses unterscheidet sich von dem in Fig. 1 dargestellten ersten Ausführungsbeispiel dadurch, dass das Festrad 11 lediglich mit dem zweiten Losrad 7 kämmt. Das Getriebe 1 weist zusätzlich ein weiteres Losrad 21 auf, das mit dem ersten Losrad 5 kämmt. Das weitere Festrad 21 ist mit der Hohlwelle 9 drehfest verbunden. Das andere Festrad 12 kämmt weiterhin mit dem ersten anderen Losrad 6 und dem zweiten anderen Losrad 8.

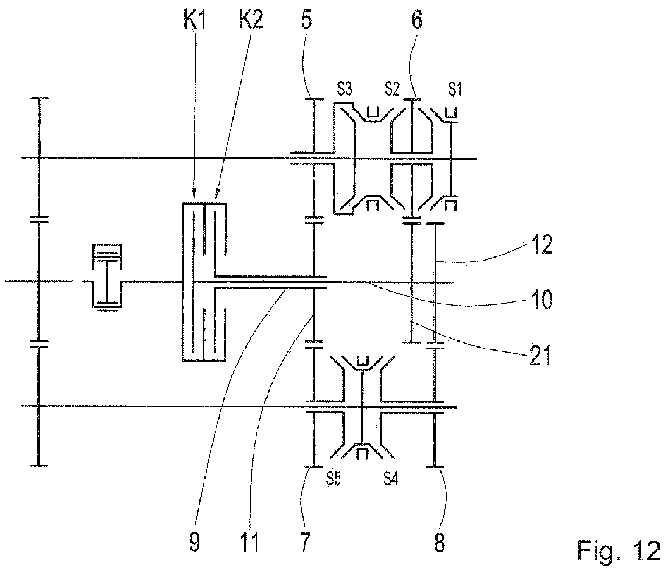

Fig. 12 zeigt ein zwölftes Ausführungsbeispiel des erfindungsgemäßen Getriebes und unterscheidet sich von dem in Fig. 1 dargestellten ersten Ausführungsbeispiel dadurch, dass das andere Festrad 12 lediglich mit dem zweiten anderen Losrad 8 kämmt. Das Getriebe 1 weist ein weiteres Festrad 21 auf, das mit dem ersten anderen Losrad 6 kämmt. Das Festrad 11 kämmt weiterhin mit dem ersten Losrad 5 und dem zweiten Losrad 7.

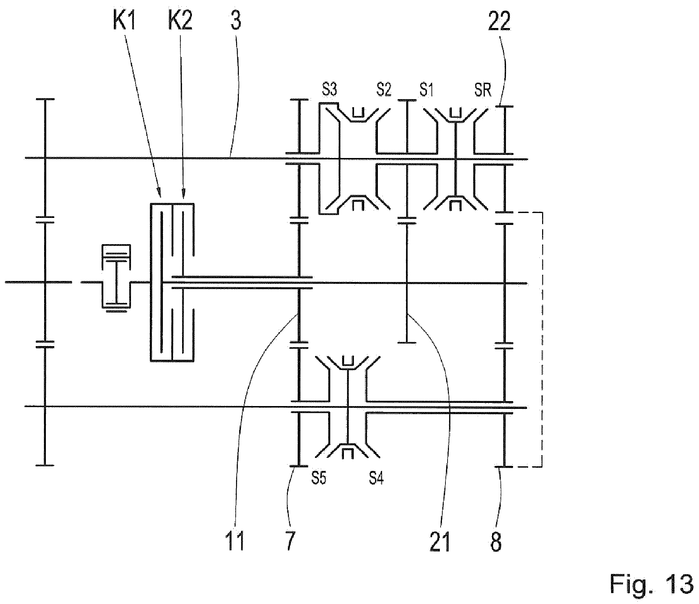

Fig. 13 zeigt ein dreizehntes Ausführungsbeispiel des erfindungsgemäßen Getriebes und unterscheidet sich von dem in Fig. 12 dargestellten zwölften Ausführungsbeispiel dadurch, dass ein viertes Losrad 22 vorhanden ist, das der ersten Welle 3 zugeordnet ist. Das vierte Losrad 22 kämmt mit dem zweiten anderen Losrad 8 wie durch die gestrichelte Linie angedeutet ist. Darüber hinaus besteht ein weiterer Unterschied darin, dass das vierte Schaltelement S1 nicht mehr als ein Einzelschaltelement ausgeführt ist, sondern ein Doppelschaltelement vorhanden ist, dass das vierte Schaltelement S1 und ein achtes Schaltelement SR aufweist. Das vierte Losrad 22 kann mittels des achten Schaltelements SR mit der ersten Welle 3 drehfest verbunden werden, damit ein Rückwärts-Fahrbetrieb realisiert werden kann.

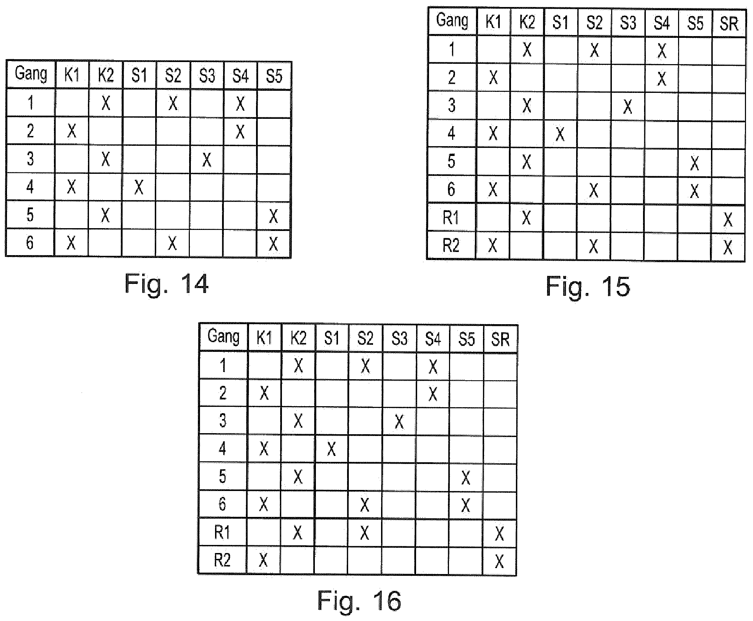

Fig. 14 zeigt eine Schaltmatrix für die in Figuren 1, 2 und 5 bis 12 dargestellten Getriebe für ein Kraftfahrzeug. Dabei ist in der Schaltmatrix und in den nachfolgenden Schaltmatrizen ein geschlossenes Schaltelement mit dem Zeichen "X" gekennzeichnet. Ein erster Vorwärtsgang für einen Vorwärts-Fahrbetrieb kann durch Schließen des siebten, des ersten und des zweiten Schaltelements K2, S2, S4 realisiert werden, wobei die restlichen Schaltelemente geöffnet sind. Ein Umschalten von dem ersten Vorwärtsgang in den zweiten Vorwärtsgang erfolgt durch Öffnen des siebten und des ersten Schaltelements K2, S2 und durch Schließen des sechsten Schaltelements K1, wobei die restlichen Schaltelemente geöffnet sind. Zum Umschalten aus dem zweiten Vorwärtsgang in den dritten Vorwärtsgang werden das sechste und zweite Schaltelement K1, S4 geöffnet und das siebte und fünfte Schaltelement K2, S3 geschlossen, wobei die restlichen Schaltelemente geöffnet sind.

Ein Umschalten aus dem dritten in den vierten Vorwärtsgang erfolgt durch Öffnen des siebten und fünften Schaltelement K2, S3 und durch Schließen des sechsten Schaltelements K1 und des vierten Schaltelements S1, wobei die restlichen Schaltelemente geöffnet sind. Ein Gangwechsel aus dem vierten in den fünften Vorwärtsgang erfolgt durch Öffnen des sechsten und vierten Schaltelements K1, S1 und durch Schließen des siebten und dritten Schaltelements K2, S5, wobei die restlichen Schaltelemente geöffnet sind. Ein Umschalten aus dem fünften in den sechsten Vorwärtsgang erfolgt durch Öffnen des siebten Schaltelements K2 und durch Schließen des sechsten und ersten Schaltelements K1, S2, wobei die restlichen Schaltelemente geöffnet sind.

Fig. 15 zeigt eine Schaltmatrix für das in Fig. 3 dargestellte Getriebe für ein Kraftfahrzeug. Zusätzlich zu den in Fig. 13 diskutierten Gängen lassen sich mit dem in Fig. 3 dargestellten Getriebe zwei Rückwärtsgänge realisieren. Ein erster Rückwärtsgang für einen Rückwärts-Fahrbetrieb lässt sich durch Schließen des siebten Schaltelements K2 und durch Schließen des achten Schaltelements SR realisieren, wobei die restlichen Schaltelemente geöffnet sind. Ein zweiter Rückwärtsgang für einen Rückwärts-Fahrbetrieb lässt sich durch Schließen des sechsten Schaltelements K1, des ersten Schaltelements S2 und des achten Schaltelements SR realisieren, wobei die restlichen Schaltelemente geöffnet sind.

Fig. 16 zeigt eine Schaltmatrix für das in Fig. 4 und in Fig. 13 dargestellte Getriebe für ein Kraftfahrzeug. Zusätzlich zu den in Fig. 14 diskutierten Gängen lassen sich mit dem in Fig. 3 dargestellten Getriebe zwei Rückwärtsgänge realisieren. Ein erster Rückwärtsgang für einen Rückwärts-Fahrbetrieb lässt sich durch Schließen des siebten Schaltelements K2, des ersten Schaltelements S2 und des achten Schaltelements SR realisieren, wobei die restlichen Schaltelemente geöffnet sind. Ein zweiter Rückwärtsgang für einen Rückwärts-Fahrbetrieb lässt sich durch Schließen des sechsten Schaltelements K1 und durch Schließen des achten Schaltelements SR realisieren, wobei die restlichen Schaltelemente geöffnet sind.

### Bezugszeichen

- 1: Getriebe
- 2: Getriebewelle
- 3: erste Welle
- 4: zweite Welle
- 5: erstes Losrad
- 6: erstes anderes Losrad
- 7: zweites Losrad
- 8: zweites anderes Losrad
- 9: Hohlwelle
- 10: Vollwelle
- 11: Festrad
- 12: anderes Festrad
- 13: Getriebeausgangswelle
- 14: erstes Festrad
- 15: zweites Festrad
- 16: dritte Welle
- 17: drittes Losrad
- 18: drittes Festrad
- 19: Eingangswelle
- 20: weitere Eingangswelle
- 21: weiteres Festrad
- 22: viertes Losrad

- S1: viertes Schaltelement
- S2: erstes Schaltelement
- S3: fünftes Schaltelement
- S4: zweites Schaltelement
- S5: drittes Schaltelement
- K0: Trennkupplung
- K1: sechstes Schaltelement
- K2: siebtes Schaltelement
- EM: elektrische Maschine
- SR: achtes Schaltelement
- VM: Verbrennungskraftmaschine

## Patentansprüche

1. Getriebe (1) für ein Kraftfahrzeug, mit einer Getriebewelle (2), einer ersten Welle (3) und einer zweiten Welle (4), mit insgesamt vier Losrädern (5, 6, 7, 8) zur Bildung von genau sechs Vorwärtsgängen, nämlich einem der ersten Welle (3) zugeordneten ersten Losrad (5), einem der ersten Welle (3) zugeordneten ersten anderen Losrad (6), einem der zweiten Welle (4) zugeordneten zweiten Losrad (7) und einem der zweiten Welle (4) zugeordneten zweiten anderen Losrad (8), wobei die Getriebewelle (2) mit der ersten Welle (3) und/oder der zweiten Welle (4) wirkverbindbar ist, einer Getriebeausgangswelle (13), die mit der ersten und zweiten Welle (3, 4) wirkverbunden ist, und einem ersten Schaltelement (S2), mittels dem das erste Losrad (5) mit dem ersten anderen Losrad (6) drehfest verbindbar ist, wobei bei einem geschlossenen Zustand des ersten Schaltelements (S2) wahlweise ein erster der sechs Vorwärtsgänge für einen Vorwärts-Fahrbetrieb oder ein sechster der sechs Vorwärtsgänge für einen Vorwärts-Fahrbetrieb realisierbar ist.

2. Getriebe (1) nach Anspruch 1, **dadurch gekennzeichnet, dass** bei einem geöffneten Zustand des ersten Schaltelements (S2) dem ersten Losrad (5) ein dritter Vorwärtsgang, dem ersten anderen Losrad (6) ein vierter Vorwärtsgang, dem zweiten Losrad (7) ein fünfter Vorwärtsgang und dem zweiten anderen Losrad (8) ein zweiter Vorwärtsgang zugeordnet ist.

3. Getriebe (1) nach Anspruch 1 oder 2, **dadurch gekennzeichnet, dass** bei einem geschlossenen Zustand des ersten Schaltelements (S2)
a. das erste Losrad (5) einem ersten Vorwärtsgang oder einem sechsten Vorwärtsgang zugeordnet ist und/oder dass
b. das erste andere Losrad (6) einem ersten Vorwärtsgang oder einem sechsten Vorwärtsgang zugeordnet ist und/oder dass
c. das zweite Losrad (7) einem sechsten Vorwärtsgang zugeordnet ist und/oder dass
d. das zweite andere Losrad (8) einem ersten Vorwärtsgang zugeordnet ist.

4. Getriebe (1) nach einem der Ansprüche 1 bis 3, **dadurch gekennzeichnet, dass**
a. das zweite andere Losrad (8) mittels eines zweiten Schaltelements (S4) mit der zweiten Welle (4) drehfest verbindbar ist und/oder dass
b. das zweite Losrad (7) mittels eines dritten Schaltelements (S5) mit der zweiten Welle (4) drehfest verbindbar ist und/oder dass
c. das erste andere Losrad (6) mittels eines vierten Schaltelements (S1) mit der ersten Welle (3) drehfest verbindbar ist und/oder dass
d. das erste Losrad (5) mittels eines fünften Schaltelements (S3) mit der ersten Welle (3) drehfest verbindbar ist.

5. Getriebe (1) nach einem der Ansprüche 1 bis 4, **dadurch gekennzeichnet, dass** die Getriebewelle (2) wenigstens zwei, insbesondere genau zwei, Festräder aufweist, wobei ein Festrad (11) mit dem ersten Losrad (5) und dem zweiten Losrad (7) kämmt und ein anderes Festrad (12) mit dem ersten anderen Losrad (6) und dem zweiten anderen Losrad (8) kämmt.

6. Getriebe (1) nach einem der Ansprüche 1 bis 4, **dadurch gekennzeichnet, dass** die Getriebewelle (2) wenigstens drei, insbesondere genau drei, Festräder aufweist, wobei
a. ein Festrad (11) mit dem zweiten Losrad (7) und ein weiteres Festrad (21) mit dem ersten Losrad (5) und ein anderes Festrad (12) mit dem ersten anderen Losrad (6) und dem zweiten anderen Losrad (8) kämmt oder dass
b. ein Festrad (11) mit dem ersten und zweiten Losrad (5, 7) und ein weiteres Festrad (21) mit dem ersten anderen Losrad (6) und ein anderes Festrad (12) mit dem zweiten anderen Losrad (8) kämmt.

7. Getriebe (1) nach einem der Ansprüche 1 bis 6, **dadurch gekennzeichnet, dass** die Getriebewelle (2) eine Hohlwelle (9) und eine Vollwelle (10) aufweist.

8. Getriebe (1) nach Anspruch 7, **dadurch gekennzeichnet, dass**
a. das Festrad (11) mit der Hohlwelle (9) und das andere Festrad (12) mit der Vollwelle (10) drehfest verbunden ist oder dass
b. das Festrad (11) mit der Vollwelle (10) und das andere Festrad (12) mit der Hohlwelle (9) drehfest verbunden ist oder dass
c. das Festrad (11) mit der Hohlwelle (9) und das andere Festrad (12) mit der Vollwelle (10) drehfest verbunden ist und das weitere Festrad (21) mit der Vollwelle (10) oder der Hohlwelle (9) drehfest verbunden ist oder dass
d. das Festrad (11) mit der Vollwelle (10) und das andere Festrad (12) mit der Hohlwelle (9) drehfest verbunden ist und das weitere Festrad (21) mit der Vollwelle (10) oder der Hohlwelle (9) drehfest verbunden ist.

9. Getriebe (1) nach Anspruch 7 oder 8, **dadurch gekennzeichnet, dass** das Getriebe (1) eine Eingangswelle (19) aufweist, die mit der Verbrennungskraftmaschine (VM) wirkverbindbar ist, wobei
a. das Getriebe (1) ein sechstes Schaltelement (K1) aufweist, mittels dem die Eingangswelle (19) mit dem anderen Festrad (12) drehfest verbindbar ist und/oder wobei
b. das Getriebe (1) ein siebtes Schaltelement (K2) aufweist, mittels dem die Eingangswelle (19) mit dem Festrad (11) drehfest verbindbar ist.

10. Getriebe (1) nach einem der Ansprüche 1 bis 9, **dadurch gekennzeichnet, dass** das Getriebe (1) eine weitere Eingangswelle (20) aufweist, die mit einer elektrischen Maschine (EM) drehfest verbindbar ist.

11. Getriebe (1) nach Anspruch 10, **dadurch gekennzeichnet, dass**
a. die weitere Eingangswelle (20) mit der Eingangswelle (19) drehfest verbunden ist oder dass
b. die weitere Eingangswelle (20) mit der Hohlwelle (9) drehfest verbunden ist.

12. Getriebe (1) nach einem der Ansprüche 1 bis 10, **dadurch gekennzeichnet, dass** das Getriebe (1) eine dritte Welle (16), die mit der Getriebeausgangswelle (13) wirkverbunden ist, ein der dritten Welle (16) zugeordnetes Losrad (17) zur Bildung eines Rückwärtsgangs, das mit dem ersten Losrad (5) oder dem zweiten Losrad (7) kämmt, und ein achtes Schaltelement (SR) aufweist, mittels dem das der dritten Welle (16) zugeordnete Losrad (17) mit der dritten Welle (16) drehfest verbindbar ist.

13. Getriebe (1) nach einem der Ansprüche 1 bis 11, **dadurch gekennzeichnet, dass** das Getriebe zur Bildung eines Rückwärtsgangs ein zusätzliches Losrad (22) aufweist, das der ersten Welle (3) zugeordnet ist und mit dem zweiten anderen Losrad (8) kämmt, und ein achtes Schaltelement (SR) aufweist, mittels dem das zusätzliche Losrad (22) mit der ersten Welle (3) drehfest verbindbar ist.

14. Hybridantrieb mit einem Getriebe (1) nach einem der Ansprüche 1 bis 13, **dadurch gekennzeichnet, dass** die Verbrennungskraftmaschine (VM) mit dem Getriebe (1), insbesondere die Eingangswelle (19) des Getriebes (1), wirkverbunden ist und die elektrische Maschine (EM) mit der weiteren Eingangswelle (20) drehfest verbunden ist.

15. Kraftfahrzeug mit einem Getriebe (1) nach einem der Ansprüche 1 bis 13 und/oder einem Hybridantrieb nach Anspruch 14.

## Claims

1. Transmission (1) for a motor vehicle, with a transmission shaft (2), a first shaft (3) and a second shaft (4), with a total of four idler gears (5, 6, 7, 8) for the formation of precisely six forward gears, namely a first idler gear (5) which is assigned to the first shaft (3), a first other idler gear (6) which is assigned to the first shaft (3), a second idler gear (7) which is assigned to the second shaft (4), and a second other idler gear (8) which is assigned to the second shaft (4), it being possible for the transmission shaft (2) to be operatively connected to the first shaft (3) and/or the second shaft (4), with a transmission output shaft (13) which is operatively connected to the first and second shaft (3, 4), and with a first shifting element (S2), by means of which the first idler gear (5) can be connected fixedly to the first other idler gear (6) for conjoint rotation, it being possible, in a closed state of the first shifting element (S2), for a first one of the six forward gears for a forward driving operation or a sixth one of the six forward gears for a forward driving operation to be realised selectively.

2. Transmission (1) according to Claim 1, **characterized in that**, in the case of an open state of the first shifting element (S2), the first idler gear (5) is assigned a third forward gear, the first other idler gear (6) is assigned a fourth forward gear, the second idler gear (7) is assigned a fifth forward gear, and the second other idler gear (8) is assigned a second forward gear.

3. Transmission (1) according to Claim 1 or 2, **characterized in that**, in the case of a closed state of the first shifting element (S2),
a. the first idler gear (5) is assigned to a first forward gear or a sixth forward gear, and/or **in that**
b. the first other idler gear (6) is assigned to a first forward gear or a sixth forward gear, and/or in that
c. the second idler gear (7) is assigned to a sixth forward gear, and/or **in that**
d. the second other idler gear (8) is assigned to a first forward gear.

4. Transmission (1) according to one of Claims 1 to 3, **characterized in that**
a. the second other idler gear (8) can be connected fixedly by means of a second shifting element (S4) to the second shaft (4) for conjoint rotation, and/or **in that**
b. the second idler gear (7) can be connected fixedly by means of a third shifting element (S5) to the second shaft (4) for conjoint rotation, and/or **in that**
c. the first other idler gear (6) can be connected fixedly by means of a fourth shifting element (S1) to the first shaft (3) for conjoint rotation, and/or in that
d. the first idler gear (5) can be connected fixedly by means of a fifth shifting element (S3) to the first shaft (3) for conjoint rotation.

5. Transmission (1) according to one of Claims 1 to 4, **characterized in that** the transmission shaft (2) has at least two, in particular precisely two, fixed gears, one fixed gear (11) meshing with the first idler gear (5) and the second idler gear (7), and another fixed gear (12) meshing with the first other idler gear (6) and the second other idler gear (8).

6. Transmission (1) according to one of Claims 1 to 4, **characterized in that** the transmission shaft (2) has at least three, in particular precisely three, fixed gears,
a. one fixed gear (11) meshing with the second idler gear (7), and a further fixed gear (21) meshing with the first idler gear (5), and another fixed gear (12) meshing with the first other idler gear (6) and the second other idler gear (8), or
b. one fixed gear (11) meshing with the first and second idler gear (5, 7), and a further fixed gear (21) meshing with the first other idler gear (6), and another fixed gear (12) meshing with the second other idler gear (8).

7. Transmission (1) according to one of Claims 1 to 6, **characterized in that** the transmission shaft (2) has a hollow shaft (9) and a solid shaft (10).

8. Transmission (1) according to Claim 7, **characterized in that**
a. the fixed gear (11) is connected fixedly to the hollow shaft (9) for conjoint rotation, and the other fixed gear (12) is connected fixedly to the solid shaft (10) for conjoint rotation, or **in that**
b. the fixed gear (11) is connected fixedly to the solid shaft (10) for conjoint rotation, and the other fixed gear (12) is connected fixedly to the hollow shaft (9) for conjoint rotation, or **in that**
c. the fixed gear (11) is connected fixedly to the hollow shaft (9) for conjoint rotation, and the other fixed gear (12) is connected fixedly to the solid shaft (10) for conjoint rotation, and the further fixed gear (21) is connected fixedly to the solid shaft (10) or the hollow shaft (9) for conjoint rotation, or **in that**
d. the fixed gear (11) is connected fixedly to the solid shaft (10) for conjoint rotation, and the other fixed gear (12) is connected fixedly to the hollow shaft (9) for conjoint rotation, and the further fixed gear (21) is connected fixedly to the solid shaft (10) or the hollow shaft (9) for conjoint rotation.

9. Transmission (1) according to Claim 7 or 8, **characterized in that** the transmission (1) has an input shaft (19) which can be operatively connected to the internal combustion engine (VM),
a. the transmission (1) having a sixth shifting element (K1), by means of which the input shaft (19) can be connected fixedly to the other fixed gear (12) for conjoint rotation, and/or
b. the transmission (1) having a seventh shifting element (K2), by means of which the input shaft (19) can be connected fixedly to the fixed gear (11) for conjoint rotation.

10. Transmission (1) according to one of Claims 1 to 9, **characterized in that** the transmission (1) has a further input shaft (20) which can be connected fixedly to an electric machine (EM) for conjoint rotation.

11. Transmission (1) according to Claim 10, **characterized in that**
a. the further input shaft (20) is connected fixedly to the input shaft (19) for conjoint rotation, or in that
b. the further input shaft (20) is connected fixedly to the hollow shaft (9) for conjoint rotation.

12. Transmission (1) according to one of Claims 1 to 10, **characterized in that** the transmission (1) has a third shaft (16) which is operatively connected to the transmission output shaft (13), an idler gear (17) which is assigned to the third shaft (16) for the formation of a reverse gear, which idler gear (17) meshes with the first idler gear (5) or the second idler gear (7), and an eighth shifting element (SR), by means of which the idler gear (17) which is assigned to the third shaft (16) can be connected fixedly to the third shaft (16) for conjoint rotation.

13. Transmission (1) according to one of Claims 1 to 11, **characterized in that**, for the formation of a reverse gear, the transmission has an additional idler gear (22) which is assigned to the first shaft (3) and meshes with the second other idler gear (8), and has an eighth shifting element (SR), by means of which the additional idler gear (22) can be connected fixedly to the first shaft (3) for conjoint rotation.

14. Hybrid drive with a transmission (1) according to one of Claims 1 to 13, **characterized in that** the internal combustion engine (VM) is operatively connected to the transmission (1), in particular the input shaft (19) of the transmission (1), and the electric machine (EM) is connected fixedly to the further input shaft (20) for conjoint rotation.

15. Motor vehicle with a transmission (1) according to one of Claims 1 to 13 and/or a hybrid drive according to Claim 14.

## Revendications

1. Boîte de vitesses (1) pour un véhicule à moteur, comportant un arbre de boîte de vitesses (2), un premier arbre (3) et un deuxième arbre (4), avec en tout quatre pignons fous (5, 6, 7, 8) pour la formation d'exactement six rapports de marche avant, à savoir un premier pignon fou (5) associé au premier arbre (3), un autre premier pignon fou (6) associé au premier arbre (3), un deuxième pignon fou (7) associé au deuxième arbre (4) et un autre deuxième pignon fou (8) associé au deuxième arbre (4), l'arbre de boîte de vitesses (2) pouvant être relié fonctionnellement au premier arbre (3) et/ou au deuxième arbre (4), un arbre de sortie de boîte de vitesses (13), qui est relié fonctionnellement au premier et au deuxième arbre (3, 4), et un premier élément de changement de vitesse (S2), au moyen duquel le premier pignon fou (5) peut être relié de manière solidaire en rotation à l'autre premier pignon fou (6), un premier des six rapports de marche avant pour un mode de conduite en marche avant ou un sixième des six rapports de marche avant pour un mode de conduite en marche avant pouvant être réalisé sélectivement en cas d'état fermé du premier élément de changement de vitesse (S2).

2. Boîte de vitesses (1) selon la revendication 1, **caractérisée en ce qu'**en cas d'état ouvert du sixième élément de changement de vitesse (S2), un troisième rapport de marche avant est associé au premier pignon fou (5), un quatrième rapport de marche avant est associé à l'autre premier pignon fou (6), un cinquième rapport de marche avant est associé au deuxième pignon fou (7) et un deuxième rapport de marche avant est associé à l'autre deuxième pignon fou (8).

3. Boîte de vitesses (1) selon la revendication 1 ou 2, **caractérisée en ce qu'**en cas d'état fermé du premier élément de changement de vitesse (S2)
a. le premier pignon fou (5) est associé à un premier rapport de marche avant ou à un sixième rapport de marche avant et/ou **en ce que**
b. l'autre premier pignon fou (6) est associé à un premier rapport de marche avant ou à un sixième rapport de marche avant et/ou **en ce que**
c. le deuxième pignon fou (7) est associé à un sixième rapport de marche avant et/ou **en ce que**
d. l'autre deuxième pignon fou (8) est associé à un premier rapport de marche avant.

4. Boîte de vitesses (1) selon l'une des revendications 1 à 3, **caractérisée en ce que**
a. l'autre deuxième pignon fou (8) peut être relié de manière solidaire en rotation au deuxième arbre (4) au moyen d'un deuxième élément de changement de vitesse (S4) et/ou **en ce que**
b. le deuxième pignon fou (7) peut être relié de manière solidaire en rotation au deuxième arbre (4) au moyen d'un troisième élément de changement de vitesse (S5) et/ou **en ce que**
c. l'autre premier pignon fou (6) peut être relié de manière solidaire en rotation au premier arbre (3) au moyen d'un quatrième élément de changement de vitesse (S1) et/ou **en ce que**
d. le premier pignon fou (5) peut être relié de manière solidaire en rotation au premier arbre (3) au moyen d'un cinquième élément de changement de vitesse (S3).

5. Boîte de vitesses (1) selon l'une des revendications 1 à 4, **caractérisée en ce que** l'arbre de boîte de vitesses (2) comprend au moins deux, en particulier exactement deux, pignons fixes, un pignon fixe (11) s'engrenant avec le premier pignon fou (5) et le deuxième pignon fou (7) et un autre pignon fixe (12) s'engrenant avec l'autre premier pignon fou (6) et l'autre deuxième pignon fou (8) .

6. Boîte de vitesses (1) selon l'une des revendications 1 à 4, **caractérisée en ce que** l'arbre de boîte de vitesses (2) comprend au moins trois, en particulier exactement trois, pignons fixes,
a. un pignon fixe (11) s'engrenant avec le deuxième pignon fou (7) et un autre pignon fixe (21) s'engrenant avec le premier pignon fou (5) et un autre pignon fixe (12) s'engrenant avec l'autre premier pignon fou (6) et l'autre deuxième pignon fou (8) ou
b. un pignon fixe (11) s'engrenant avec le premier et le deuxième pignon fou (5, 7) et un autre pignon fixe (21) s'engrenant avec l'autre premier pignon fou (6) et un autre pignon fixe (12) s'engrenant avec l'autre deuxième pignon fou (8).

7. Boîte de vitesses (1) selon l'une des revendications 1 à 6, **caractérisée en ce que** l'arbre de boîte de vitesses (2) comprend un arbre creux (9) et un arbre plein (10).

8. Boîte de vitesses (1) selon la revendication 7, **caractérisée en ce que**
a. le pignon fixe (11) est relié de manière solidaire en rotation à l'arbre creux (9) et l'autre pignon fixe (12) est relié de manière solidaire en rotation à l'arbre plein (10) ou **en ce que**
b. le pignon fixe (11) est relié de manière solidaire en rotation à l'arbre plein (10) et l'autre pignon fixe (12) est relié de manière solidaire en rotation à l'arbre creux (9) ou **en ce que**
c. le pignon fixe (11) est relié de manière solidaire en rotation à l'arbre creux (9) et l'autre pignon fixe (12) est relié de manière solidaire en rotation à l'arbre plein (10) et l'autre pignon fixe (21) est relié de manière solidaire en rotation à l'arbre plein (10) ou à l'arbre creux (9) ou **en ce que**
d. le pignon fixe (11) est relié de manière solidaire en rotation à l'arbre plein (10) et l'autre pignon fixe (12) est relié de manière solidaire en rotation à l'arbre creux (9) et l'autre pignon fixe (21) est relié de manière solidaire en rotation à l'arbre plein (10) ou à l'arbre creux (9).

9. Boîte de vitesses (1) selon la revendication 7 ou 8, **caractérisée en ce que** la boîte de vitesses (1) comprend un arbre d'entrée (19) qui peut être relié fonctionnellement au moteur à combustion interne (VM), a. la boîte de vitesses (1) comprenant un sixième élément de changement de vitesse (K1), au moyen duquel l'arbre d'entrée (19) peut être relié de manière solidaire en rotation à l'autre pignon fixe (12) et/ou b. la boîte de vitesses (1) comprenant un septième élément de changement de vitesse (K2), au moyen duquel l'arbre d'entrée (19) peut être relié de manière solidaire en rotation au pignon fixe (11).

10. Boîte de vitesses (1) selon l'une des revendications 1 à 9, **caractérisée en ce que** la boîte de vitesses (1) comprend un autre arbre d'entrée (20) qui peut être relié de manière solidaire en rotation à un moteur électrique (EM) .

11. Boîte de vitesses (1) selon la revendication 10, **caractérisée en ce que**
a. l'autre arbre d'entrée (20) est relié de manière solidaire en rotation à l'arbre d'entrée (19) ou **en ce que**
b. l'autre arbre d'entrée (20) est relié de manière solidaire en rotation à l'arbre creux (9).

12. Boîte de vitesses (1) selon l'une des revendications 1 à 10, **caractérisée en ce que** la boîte de vitesses (1) comprend un troisième arbre (16) qui est relié fonctionnellement à l'arbre de sortie de boîte de vitesses (13), un pignon fou (17) associé au troisième arbre (16) pour la formation d'un rapport de marche arrière, lequel pignon fou s'engrène avec le premier pignon fou (5) ou le deuxième pignon fou (7), et un huitième élément de changement de vitesse (SR), au moyen duquel le pignon fou (17) associé au troisième arbre (16) peut être relié de manière solidaire en rotation au troisième arbre (16).

13. Boîte de vitesses (1) selon l'une des revendications 1 à 11, **caractérisée en ce que** la boîte de vitesses comprend, pour la formation d'un rapport de marche arrière, un pignon fou supplémentaire (22) qui est associé au premier arbre (3) et s'engrène avec l'autre deuxième pignon fou (8), et un huitième élément de changement de vitesse (SR), au moyen duquel le pignon fou supplémentaire (22) peut être relié de manière solidaire en rotation au premier arbre (3).

14. Entraînement hybride comportant une boîte de vitesses (1) selon l'une des revendications 1 à 13, **caractérisé en ce que** le moteur à combustion interne (VM) est relié fonctionnellement à la boîte de vitesses (1), en particulier à l'arbre d'entrée (19) de la boîte de vitesses (1), et le moteur électrique (EM) est relié de manière solidaire en rotation à l'autre arbre d'entrée (20) .

15. Véhicule à moteur comportant une boîte de vitesses (1) selon l'une des revendications 1 à 13 et/ou un entraînement hybride selon la revendication 14.
